Europäisches Patentamt

European Patent Office

Office européen des brevets

(19)

(11) Publication number: **0 197 725**
**A2**

(12) **EUROPEAN PATENT APPLICATION**

(21) Application number: **86302321.4**

(22) Date of filing: **27.03.86**

(51) Int. Cl.⁴: **F 16 J 15/32**

(30) Priority: **30.03.85 GB 8508379**

(43) Date of publication of application:
**15.10.86 Bulletin 86/42**

(84) Designated Contracting States:
**AT BE CH DE FR GB IT LI LU NL SE**

(71) Applicant: **McCoy, Ronald Geoffrey**
**113 Groveley Lane**
**West Heath Birmingham B31 4QA(GB)**

(72) Inventor: **McCoy, Ronald Geoffrey**
**113 Groveley Lane**
**West Heath Birmingham B31 4QA(GB)**

(74) Representative: **Russell, Paul Sidney et al,**
**Barker, Brettell & Duncan 138 Hagley Road Edgbaston**
**Birmingham B16 9PW(GB)**

(54) **Shaft sealing means.**

(57) A split seal is formed by joining two extruded seal body elements (14, 16) as radially inner and outer components of the seal. The elements are interlocked by means of a dovetail-like joint in which a rib (18) extending along the inner element is retained within a channel (20) in the outer element. The interlock permits some relative sliding movement between the elements.

FIG.1.

1

## SHAFT SEALING MEANS

This invention is concerned with improvements in or relating to shaft sealing means which is suitable for application to an installed machine shaft by wrapping about the shaft to form a substantially closed sealing annulus on the shaft. The annulus may be maintained closed on the shaft by a surrounding machine element forming a housing, between which and the shaft the annulus seals.

Such sealing means has most commonly in the past comprised a body in one generally annular piece moulded of a flexible rubbery material by a compression moulding process. Such bodies have either been moulded split or have been split after moulding (to enable the annulus to be opened for installation of the seal) and seals so provided are commonly known as split seals.

The moulds required for the production of such annular split seal bodies are expensive and it is an object of the present invention to provide improved shaft sealing means, suitable for similar purposes to a conventional split seal, which can enable cost to be reduced.

In one of its aspects the invention provides shaft sealing means comprising two extruded seal body elements which are joined together along their lengths to form a flexible assembly which is adapted to be wrapped about a shaft to seal between the shaft and a housing with said elements disposed as radially inner and outer components of the seal.

The two extruded body elements may be interlocked by means of a generally dovetail-like joint in which a longitudinally-extending linking rib of one element (preferably the inner element) is retained within a correspondingly-shaped channel of the other element, the interlock permitting at least a small degree of relative sliding movement between abutting faces of the elements.

The advantage can be gained that the two body elements can be extruded of a rubber material, cheaply in long lengths, suitable portions being cut from the extruded lengths to provide the body elements for a particular application. The further advantage can be gained that the two elements may be of different materials. Webbing or other reinforcement may be introduced into either or both of the elements as required; for example, in one construction the outer element might be generally reinforced whilst maybe only a linking rib of the inner element (serving to connect the two elements) is reinforced.

The accompanying drawings illustrate three constructions of shaft seal, hereinafter described, which serve to illustrate the invention by way of example.

In the accompanying drawings:

Figure 1 is a cross-section on an axial plane through a first seal, shown installed between a shaft and a housing; and

Figures 2 and 3 similarly illustrate, though to a smaller scale than Figure 1, two other constructions of seal in which different forms of dovetail-like joint are employed to interlink two body elements of the seal.

1

## SHAFT SEALING MEANS

This invention is concerned with improvements in or relating to shaft sealing means which is suitable for application to an installed machine shaft by wrapping about the shaft to form a substantially closed sealing annulus on the shaft. The annulus may be maintained closed on the shaft by a surrounding machine element forming a housing, between which and the shaft the annulus seals.

Such sealing means has most commonly in the past comprised a body in one generally annular piece moulded of a flexible rubbery material by a compression moulding process. Such bodies have either been moulded split or have been split after moulding (to enable the annulus to be opened for installation of the seal) and seals so provided are commonly known as split seals.

The moulds required for the production of such annular split seal bodies are expensive and it is an object of the present invention to provide improved shaft sealing means, suitable for similar purposes to a conventional split seal, which can enable cost to be reduced.

In one of its aspects the invention provides shaft sealing means comprising two extruded seal body elements which are joined together along their lengths to form a flexible assembly which is adapted to be wrapped about a shaft to seal between the shaft and a housing with said elements disposed as radially inner and outer components of the seal.

The two extruded body elements may be interlocked by means of a generally dovetail-like joint in which a

2

longitudinally-extending linking rib of one element (preferably the inner element) is retained within a correspondingly-shaped channel of the other element, the interlock permitting at least a small degree of relative sliding movement between abutting faces of the elements.

The advantage can be gained that the two body elements can be extruded of a rubber material, cheaply in long lengths, suitable portions being cut from the extruded lengths to provide the body elements for a particular application. The further advantage can be gained that the two elements may be of different materials. Webbing or other reinforcement may be introduced into either or both of the elements as required; for example, in one construction the outer element might be generally reinforced whilst maybe only a linking rib of the inner element (serving to connect the two elements) is reinforced.

The accompanying drawings illustrate three constructions of shaft seal, hereinafter described, which serve to illustrate the invention by way of example.

In the accompanying drawings:

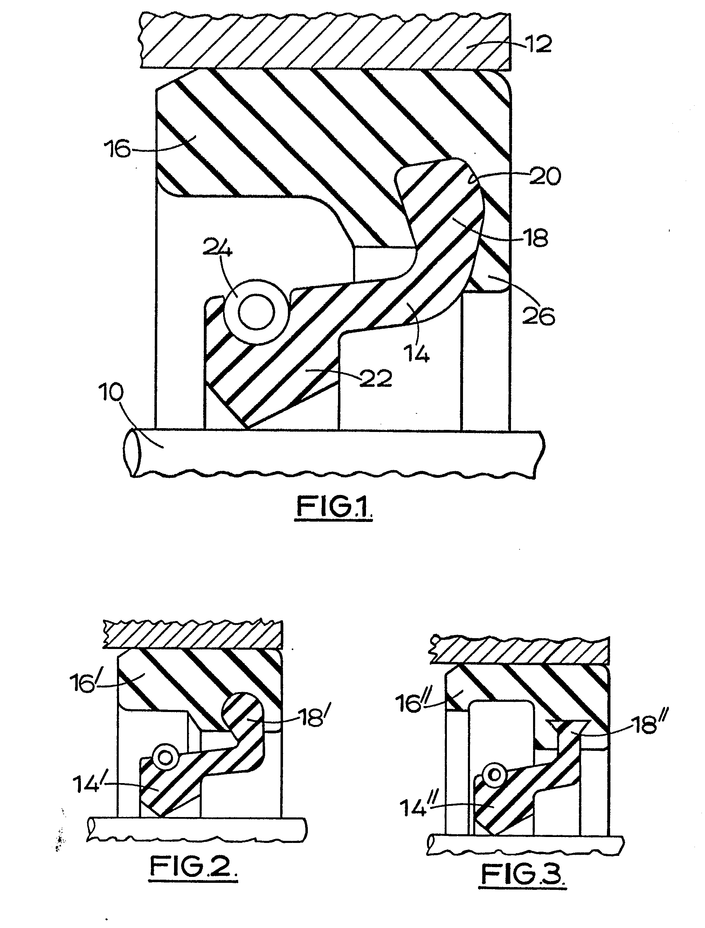

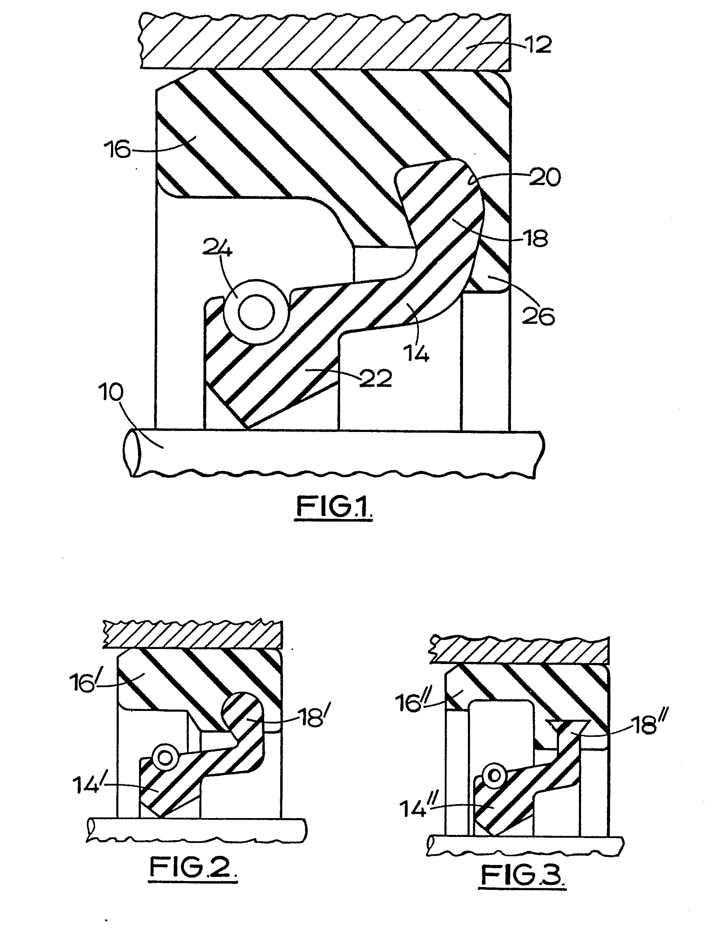

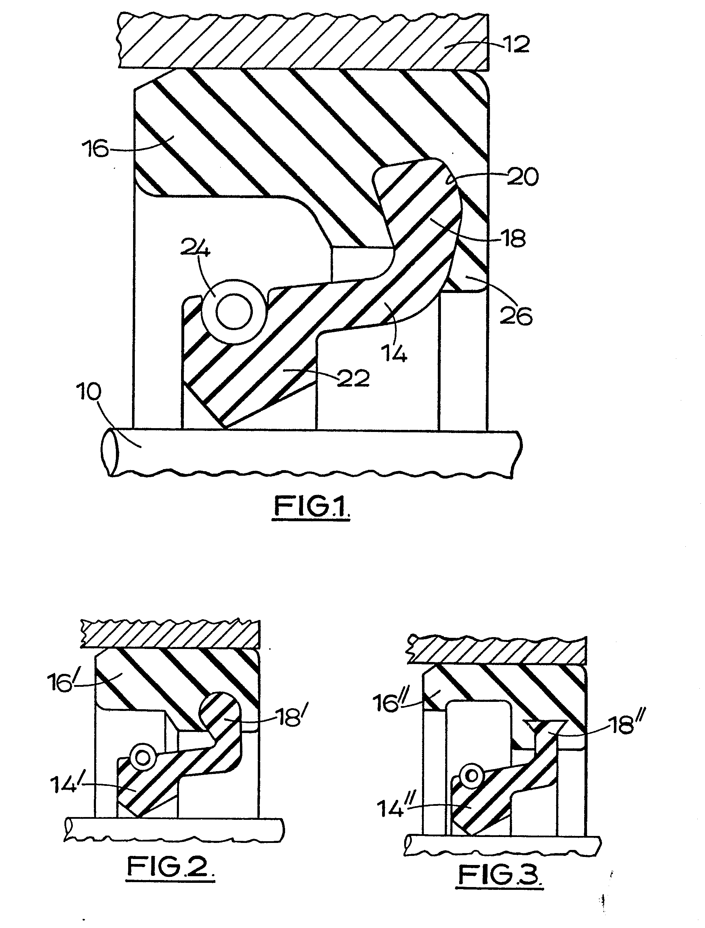

Figure 1 is a cross-section on an axial plane through a first seal, shown installed between a shaft and a housing; and

Figures 2 and 3 similarly illustrate, though to a smaller scale than Figure 1, two other constructions of seal in which different forms of dovetail-like joint are employed to interlink two body elements of the seal.

1

SHAFT SEALING MEANS

This invention is concerned with improvements in or relating to shaft sealing means which is suitable for application to an installed machine shaft by wrapping about the shaft to form a substantially closed sealing annulus on the shaft. The annulus may be maintained closed on the shaft by a surrounding machine element forming a housing, between which and the shaft the annulus seals.

Such sealing means has most commonly in the past comprised a body in one generally annular piece moulded of a flexible rubbery material by a compression moulding process. Such bodies have either been moulded split or have been split after moulding (to enable the annulus to be opened for installation of the seal) and seals so provided are commonly known as split seals.

The moulds required for the production of such annular split seal bodies are expensive and it is an object of the present invention to provide improved shaft sealing means, suitable for similar purposes to a conventional split seal, which can enable cost to be reduced.

In one of its aspects the invention provides shaft sealing means comprising two extruded seal body elements which are joined together along their lengths to form a flexible assembly which is adapted to be wrapped about a shaft to seal between the shaft and a housing with said elements disposed as radially inner and outer components of the seal.

The two extruded body elements may be interlocked by means of a generally dovetail-like joint in which a longitudinally-extending linking rib of one element (preferably the inner element) is retained within a correspondingly-shaped channel of the other element, the interlock permitting at least a small degree of relative sliding movement between abutting faces of the elements.

The advantage can be gained that the two body elements can be extruded of a rubber material, cheaply in long lengths, suitable portions being cut from the extruded lengths to provide the body elements for a particular application. The further advantage can be gained that the two elements may be of different materials. Webbing or other reinforcement may be introduced into either or both of the elements as required; for example, in one construction the outer element might be generally reinforced whilst maybe only a linking rib of the inner element (serving to connect the two elements) is reinforced.

The accompanying drawings illustrate three constructions of shaft seal, hereinafter described, which serve to illustrate the invention by way of example.

In the accompanying drawings:

Figure 1 is a cross-section on an axial plane through a first seal, shown installed between a shaft and a housing; and

Figures 2 and 3 similarly illustrate, though to a smaller scale than Figure 1, two other constructions of seal in which different forms of dovetail-like joint are employed to interlink two body elements of the seal.

The spring-loaded seal illustrated by Figure 1, shown sealing between a shaft 10 and a machine element forming a housing 12, comprises a radially inner body element 14 (engaging the shaft 10) and a radially outer body element 16 (engaging the housing 12). Each of the two elements 14 and 16 is provided by an appropriate length cut from an extruded section of a suitable rubbery material, and the two elements are joined together along their lengths by means of a dovetail-like interlocking joint between them; a longitudinally extending linking rib 18 of the inner element 14 is fitted into and retained within a correspondingly-shaped channel 20 of the outer element 16 to effect an interlock between the elements.

The assembly of the two elements is sufficiently flexible for it to be wrapped about the shaft 10 in installation of the seal, slight sliding movement between the elements (at the interlock) being accommodated as curvature is assumed. End faces of the assembly are cut appropriately for a good joint.

The inner element 14 comprises a suitably formed shaft-engaging portion 22 which is supported in a conventional manner by means of a spring 24, the spring serving to urge the portion 22 into sealing engagement with the shaft 10. Additional axial support is provided for the inner element 14, adjacent to the joint between the two elements, by means of a radially inwardly projecting lip 26 of the outer element 16 on the low pressure side of the inner element.

Two similar constructions of shaft seal are illustrated by Figures 2 and 3. It is to be observed that the precise form of dovetail-like joint employed to interlock the body elements 14' and 16', and 14"

4

and 16" respectively, is in each case different from that of the construction shown in Figure 1, but in each case the linking rib 18, 18' or 18" provides an enlarged head of the inner element locked into a similarly shaped channel in the outer element.

5

## CLAIMS

1. A flexible shaft seal in the form of a split seal adapted to be wrapped about a shaft (10) to seal between the shaft and a housing (12), characterised in that the seal comprises two extruded seal body elements (14) and (16) which are joined together along their lengths for the elements to be disposed as radially inner and outer components of the seal.

2. A shaft seal according to claim 1 in which the two extruded elements (14) and (16) are joined by means of a longitudinally-extending linking rib (18) of one element (14) which is retained within a channel (20) of the other element (16), the joint permitting at least a small amount of relative sliding movement between the elements.

3. A shaft seal according to claim 2 in which the rib (18) and the channel (20) enable the two extruded elements to be interlocked in a dovetail-like joint.

4. A shaft seal according to either of claims 2 and 3 in which the linking rib (18) is provided on the inner component of the seal.

5. Shaft sealing means comprising two indeterminate lengths of extruded material suitably formed for joining together and cutting to length in providing the seal body elements (14) and (16) of a flexible shaft seal according to claim 1, one of the lengths (14) comprising a longitudinally-extending linking rib (18) and the other of the lengths (16) being formed with a channel (20) adapted to receive the linking rib in joining the two lengths together.

FIG.1.

FIG.2.

FIG.3.

1/1

0197725

FIG.1.

FIG.2.

FIG.3.

0197725

FIG.1.

FIG.2.

FIG.3.